# EUROPEAN PATENT SPECIFICATION

(11) **EP 3 059 168 B1**
(45) Date of publication and mention of the grant of the patent: **05.02.2020**
(21) Application number: 15197576.0
(22) Date of filing: 02.12.2015
(51) Int. Cl.: B64D 13/06, B64D 33/08, B64D 13/00, F28F 13/00, F28D 21/00

(54) **LARGE CAPACITY HEAT SINK**
KÜHLKÖRPER MIT GROSSER KAPAZITÄT
DISSIPATEUR THERMIQUE DE GRANDE CAPACITÉ

(30) Priority: 02.12.2014 US 201414557750
(43) Date of publication of application: 24.08.2016
(73) Proprietor: Hamilton Sundstrand Corporation, Charlotte, NC 28217 (US)
(72) Inventor: ANDRES, Michael J., Rockton, IL Illinois 61072 (US)
(74) Representative: Dehns

(56) References cited:
- WO-A1-2012/045028
- WO-A1-2014/160458

## Description

### BACKGROUND

This application relates to a system for cooling a thermal load and a method of cooling a thermal load.

Modern vehicles are being provided with more sophisticated electric systems. The operating capability or performance of typical air and ground vehicles with high power systems generally depends on heat sink capacity and availability. Typical high power systems are designed to operate at a particular operating temperature, and thus are connected to a heat sink to reject excess heat.

Some known vehicle cooling systems utilize fuel as the primary heat sink, though its cooling capacity is below what may be desired. Other known cooling systems use ram air as a heat sink, though this method increases radar signature and adds to vehicle drag. Ground vehicles are often limited to ambient air as the heat sink, which may experience drawbacks of exhaust plume interference, acoustic noise hazard for nearby personnel, vehicle vibration and heat exchanger fouling.

Simple water boiler systems were used long ago in high speed aircraft. In such systems, an ejector was used below a set altitude to reduce the pressure in the boiler and thus the boiling temperature. However, these systems operate at a single cooling capacity. Operating temperatures of many heat generating components, such as laser diodes require tight temperature control for proper operation. WO 2012/045028 A1 discloses a system according to the preamble of independent claim 1.

In some known cooling systems, vapor cycle systems are used as a heat pump due to their favorable size and weight and ability to use electricity for the energy input.

### SUMMARY

The invention refers to a system for cooling a thermal load according to the subject-matter of claim 1. A method of cooling a thermal load according to claim 12 is also disclosed.

The various features and advantages of this invention will become apparent to those skilled in the art from the following detailed description of an embodiment. The drawings that accompany the detailed description can be briefly described as follows.

### BRIEF DESCRIPTION OF THE DRAWINGS

Figure 1 shows a schematic view of a heat sink system according to a first embodiment.
Figure 2 shows a schematic view of a heat sink system according to a second embodiment.
Figure 3 shows a schematic view of a heat sink system according to a third embodiment.
Figure 4 shows a cooling process utilizing a heat sink system, according to a first embodiment.
Figure 5 shows a cooling process utilizing a heat sink system, according to a second embodiment.

### DETAILED DESCRIPTION

Single water boiler systems were used long ago in high speed aircraft, but only provided cooling at a single cooling capacity. A single boiler system will operate with the boiler temperature at the lowest required temperature of the heat loads, so higher temperature equipment is cooled at a temperature below what is necessary.

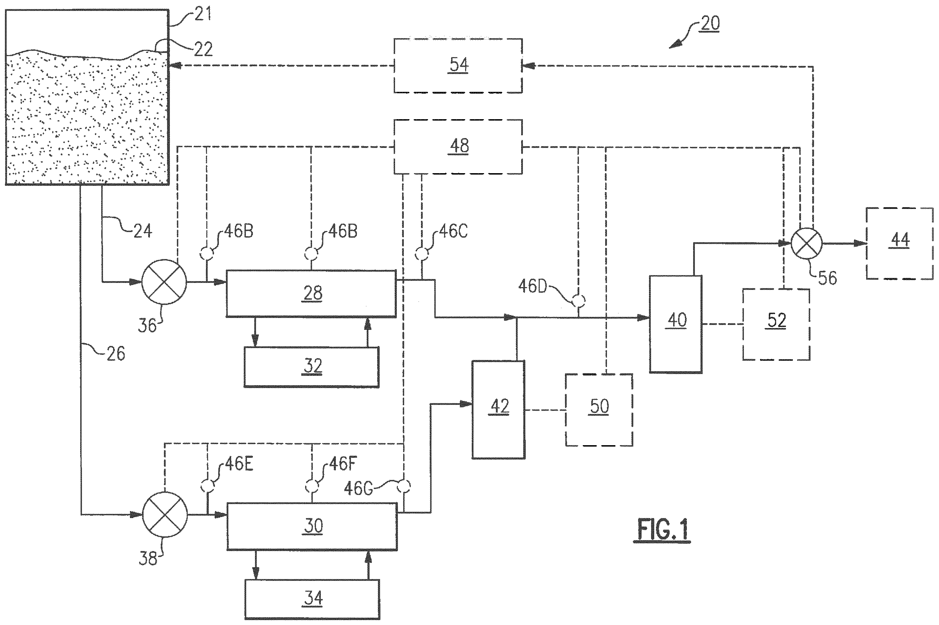

Referring to Figure 1, a schematic view of a disclosed heat sink system 20 is shown. The system of this disclosure provides high temperature cooling for high temperature equipment, such as a generator or power conversion equipment, while providing additional cooling at low temperatures for low temperature equipment, such as a laser, for example.

The heat sink system 20 includes a reservoir 21 configured to store a quantity of coolant or working fluid 22 for cooling various thermal loads, such as high-power aircraft equipment. Other systems may also benefit from the teachings of this disclosure, such as ground or marine vehicles. In one embodiment, the working fluid 22 is an expendable fluid, such as water. Using water as the cooling fluid reduces ram drag and reduces the overall weight of the system or vehicle over a mission cycle. The expendable fluid can be supplied at the start of a mission or supplemented with condensed water vapor from the vehicle exhaust during transit or standby operation, for example. Other working fluids or coolants are also contemplated, however.

The system 20 has a first cooling path 24 defined by a first heat exchanger 28, and a second, different cooling path 26 defined by a second heat exchanger 30. The first heat exchanger 28 is in thermal communication with a first heat load 32, and the second heat exchanger 30 is in thermal communication with a second heat load 34. In an embodiment, the first and second heat exchangers 28, 30 are boilers configured to elevate the temperature of the working fluid 22 from heat rejected by the heat loads 32, 34.

In some embodiments, the first and second heat loads 32, 34 have different operating temperature ranges or tolerances. In one embodiment, first heat load 32 is a high temperature heat source, such as a generator and power conversion equipment, and second heat load 34 is a low temperature heat source, such as a laser, for example. In one embodiment, each of loads 32, 34 includes one or more electrical devices or components, such as various communications and/or computing devices of a vehicle, for example.

In an embodiment, the first and second heat exchangers 28, 30 are configured with different relative cooling capacities corresponding to the operating ranges of the first and second loads 32, 34. In an embodiment, the temperature requirements of the first heat load 32 will set the temperature for first heat exchanger 28, and the temperature requirements of the second heat load 34 will set the temperature for the second heat exchanger 30. This arrangement reduces the overall weight of the system 20 and consumption of the working fluid 22.

The first and second heat exchangers 28, 30 may be configured to have independent temperature and cooling capacity control. In one embodiment, a first flow control valve 36 meters working fluid 22 communicated to the first cooling path 24 from the reservoir 21, and a second flow control valve 38 meters working fluid 22 to the second cooling path 26 from the reservoir 21. Flow control valves 36, 38 are positioned upstream of heat exchangers 28, 30 and control flow to the heat exchangers 28, 30. In another embodiment, flow control valves 36, 38 are located downstream of heat exchangers 28, 30. This arrangement permits the relative cooling capacities of the heat exchangers 28, 30 to be selectively controlled or otherwise affected.

Flow control valves 36, 38 may be passive devices or active devices configured to control flow of the working fluid 22 to the heat exchangers 28, 30 such that a desired vapor quality is maintained as the working fluid 22 exits heat exchangers 28, 30. In an embodiment, flow control valves 36, 38 are disc orifice valves, which communicate a predetermined quantity of fluid to each of the heat exchangers 28, 30. In another embodiment, flow control valves 36, 38 are variable or thermostatic expansion valves actuated or moveable in response to variation of conditions of the cooling paths 24, 26 and/or thermal loads 32, 34. In some embodiments, various conditions of the cooling paths 24, 26 and/or loads 32, 34 are measured by one or more of pressure and/or temperature sensors 46, positioned at any of the locations 46A-G, for example. In an embodiment, the variable flow control valves 36, 38 are movable in response to a signal provided by controller 48 in communication with at least one of the pressure and/or temperature sensors 46.

A pump 40 is arranged downstream of the first heat exchanger 28 and is configured to selectively exhaust the working fluid 22 to an ambient environment 44, such as overboard an aircraft, for example. In some embodiments, the system 20 includes at least one additional pump. In one embodiment, a second pump 42 is positioned downstream of the second heat exchanger 30, and communicates the working fluid 22 from the second cooling path 26 to the first cooling path 24 upstream of the first pump 40. In another embodiment, pumps 40, 42 are arranged in parallel, such that the pumps 40, 42 are operated independently. Alternatively, additional pumps are connected to at least one of heat exchangers 28, 30 arranged in series or parallel to accommodate varying quantities of exiting vapor in response to different thermal load requirements. The first pump 40 may have a pressure ratio required for the first heat exchanger 28, and the second pump 42 may have a pressure ratio required for the second heat exchanger 30.

The pumps 40, 42 are configured to lower the pressure in heat exchangers 28, 30, thus lowering the boiling temperature of the working fluid 22 such that the fluid 22 can be exhausted as a superheated vapor. Exhausting the fluid as a superheated vapor reduces the likelihood of liquid coolant entering the pumps 40, 42. In some embodiments, the pumps 40, 42 are ejectors. In an embodiment, each ejector is powered by bleed air provided by another system of the vehicle, such as a compressor section of an aircraft engine. In another embodiment, the pumps 40, 42 are vacuum pumps, which may be powered by electric motors 50 and 52, for example. The operating capacity of motors 50, 52 may be controlled by a controller 48, such that the relative cooling capacities of the heat exchangers 28, 30 are controlled or otherwise affected during system operation. In an embodiment, a temperature of cooling paths 24, 26 is controlled by varying the speed and pressure ratio of the pumps 40, 42 to control the boiling temperature and pressure of heat exchangers 28, 30. In an embodiment, pumps 40, 42 are operated to change the pressure in heat exchangers 28, 30, and thus the operating temperature of heat loads 32, 34 in response to different desired temperature setpoints. In yet another embodiment, one of pumps 40, 42 is an ejector and the other one of the pumps 40, 42 is a vacuum pump.

The working fluid 22 is selectively exhausted to the ambient environment 44 after exiting pump 40. In some examples, a valve 56 is positioned between pump 40 and a condenser 54 to meter the flow of the working fluid 22. In this arrangement, the working fluid 22 is selectively communicated downstream to the condenser 54 and collected in reservoir 21 to be reused in the system 20.

In one embodiment, the system 20 is configured such that working fluid 22 may be exhausted or recycled depending on a condition of heat loads 32, 34. For example, when the heat load 34 is operating at a low power mode, such as during an aircraft cruise segment, at least some of the working fluid 22 is recycled back to the reservoir 21, and when the heat load 34 is operating at a high power mode, at least some of the working fluid 22 is exhausted to the ambient environment 44. In some examples, the valve 56 is moveable in response to a signal communicated from the controller 48. In other examples, the valve 56 is a static device configured to exhaust a predetermined amount of working fluid 22 to the ambient environment 44 and return another predetermined amount of working fluid 22 to the reservoir 21.

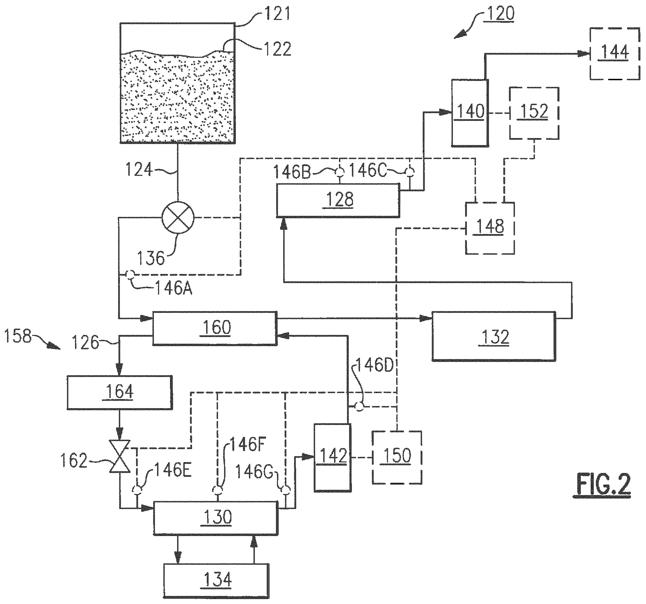

Figure 2 shows a schematic view of a second embodiment of a heat sink system 120. In this disclosure, like reference numerals designate like elements where appropriate and reference numerals with the addition of one-hundred or multiples thereof designate modified elements that are understood to incorporate the same features and benefits of the corresponding original elements. In this embodiment, a closed-loop vapor cycle system 158 is arranged in series with a first heat exchanger 128. The vapor cycle system 158 is configured to cool a second thermal load 134 with a refrigerant, different than an expendable working fluid 122 communicated from reservoir 121 to a first cooling path 124.

The vapor cycle system 158 includes a heat exchanger 160, such as a condenser or gas cooler, an expansion valve 162, a heat exchanger 130, such as an evaporator, and a pump 142 arranged in series to define a second cooling path or loop 126. The heat exchanger 160 uses working fluid 122 to cool the refrigerant circulating in the second cooling loop 126. In an embodiment, heat exchanger 160 acts as a condenser for the refrigerant in the system 158, and a boiler for working fluid 122 in the first cooling path 124. The second heat exchanger 130 is thermally coupled to the second heat load 134, such that heat is rejected to the first cooling path 124 as a heat sink. This arrangement improves the coefficient of performance of the heat exchanger 130 coupled to the second thermal load 134, resulting in lower overall power, size and weight of the system 120.

In some embodiments, heat exchanger 160 can be relatively small because the heat transfer to working fluid 122 is much better than traditional air forced convection. In one example, quantitative power benefits of adding a vapor cycle system for a 40°F evaporating temperature and 100 kW cooling capacity system are 85 kW for a fan forced air condenser and 60 kW for an evaporating water cooled condenser. Most of the power benefit is a result of lower water vapor volume flow required, resulting in lower pumping power requirements, than for the required air flow volume. An additional benefit is a result of an improved coefficient of performance of the vapor cycle system due to an assumed 120°F condensing temperature for a water system compared to an assumed 160°F condensing temperature for an air system. In one embodiment, 0.12 lbm/sec water mass flow for a total water requirement of 24 Ibm or about 3 gallons will cool 200 seconds total of ON-time per mission.

The expansion valve 162 may be actuated by controller 148 utilizing data from at least one of sensors 146E-G. In one embodiment, expansion valve 162 allows flow of refrigerant proportional to the sensed vapor superheat at an exit of second heat exchanger 130, while a ratio of the speed and/or pressure of pump 142 is varied by the controller 148 to control the temperatures at the second heat exchanger 130 and the second heat load 134. As shown, the heat exchanger 160 is located in series with the first heat load 132. The heat exchanger 160 may be upstream or downstream of the first heat load 132, depending on the needs of a particular situation.

In one embodiment, a refrigerant accumulator 164 is positioned between the heat exchanger 160 and the expansion valve 162. The refrigerant accumulator 164 is configured to store liquid refrigerant during periods of low demand, and is configured to supply liquid refrigerant above a steady state capability during periods of high demand, allowing the system 120 to effectively control the temperature of the second heat load 134 utilizing a pulse heat load technique. For example, during a pulse load ON condition, the vapor superheat exiting heat exchanger 130 will initially increase, causing the expansion valve 162 to increase its opening. The temperature at heat load 134 will tend to increase and the speed of the pump 142 will also increase. As the pulse load continues and the refrigerant accumulator 164 empties, a pressure and temperature of heat exchanger 160 will increase due to an increased thermal load above a design capacity of the heat exchanger 160. A speed and pressure ratio of pump 142 will increase to maintain a constant pressure and temperature at heat exchanger 130.

During a pulse load OFF condition, the opening of expansion valve 162 will reduce due to the reduced thermal load on heat exchanger 130, and the flow of refrigerant into the pump 142 will decrease. In this condition, the vapor cycle system 158 will operate below the design capacity of the heat exchanger 160. Vapor in the heat exchanger 160 will condense at a greater rate than the flow at pump 142, causing pressure and temperature at the heat exchanger 160 to decrease. The increased liquid refrigerant flow from the heat exchanger 160 will collect in the refrigerant accumulator 164 until the next pulse load ON period occurs.

The refrigerant accumulator 164 provides further benefits in size and weight of the overall system due to the ability to reduce the size of the heat exchanger 160 and limit the size of the heat exchanger 130 to be close to the average thermal power requirement of load 134. The magnitude of this benefit will depend on the specific application of the pulse load cycle.

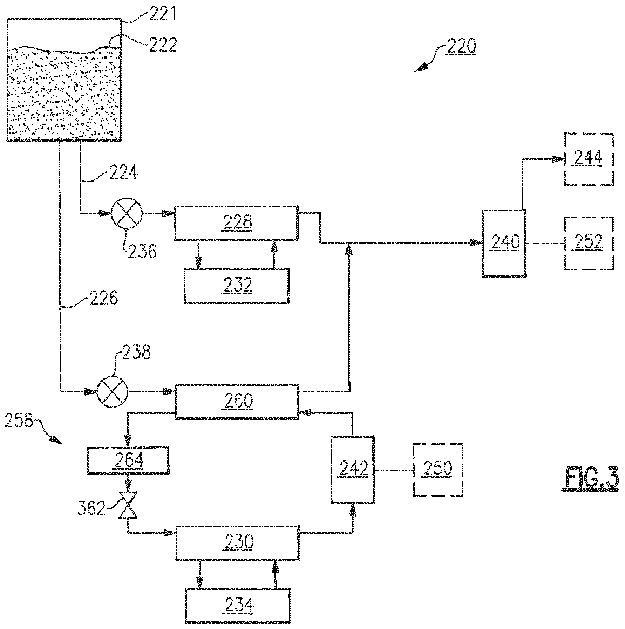

Figure 3 shows a schematic view of a third embodiment of a heat sink system 220. In this embodiment, a heat exchanger 260 is arranged in parallel with a first heat exchanger 228 and a first heat load 232. It should be apparent that the heat exchanger 260 and the first heat load 232 may be arranged in series or parallel depending on the needs of a particular situation. In a further embodiment, additional heat loads are connected to the system 220 in series or parallel.

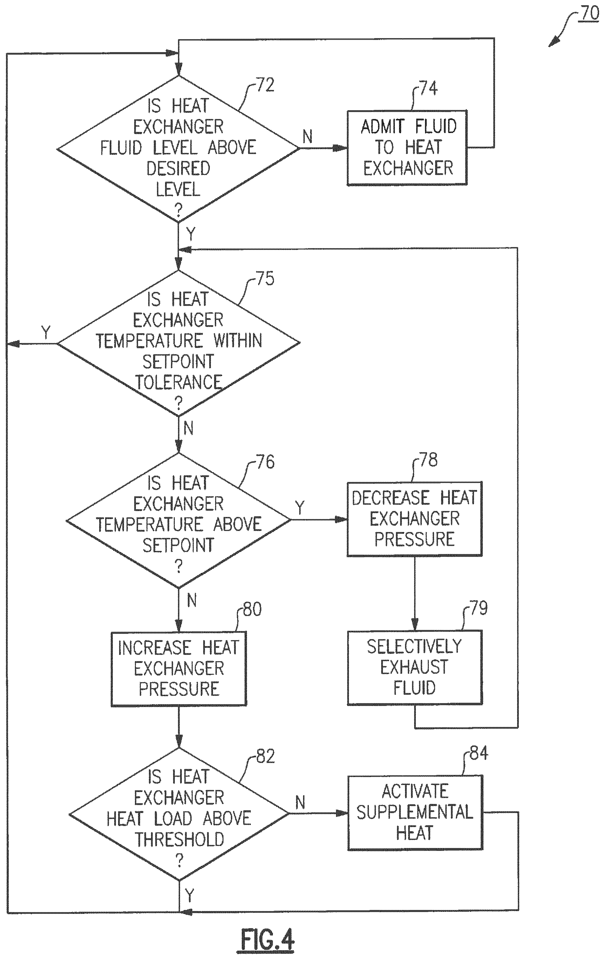

Figure 4 shows a cooling process or algorithm 70 using an expendable heat sink and may be utilized with any of the systems 20, 120, 220 described in this disclosure. The cooling process 70 maintains a relatively constant expendable working fluid level in a heat exchanger. At block 72, a measured fluid level in a heat exchanger is compared to a desired fluid level. If the measured fluid level is not above the desired fluid level, fluid is admitted to the heat exchanger at block 74. If the measured fluid level is above the desired fluid level, the temperature at the heat exchanger is compared to a predetermined temperature setpoint at block 75. If the temperature at the heat exchanger is within a tolerance of the setpoint, control then returns to block 72.

If the temperature at the heat exchanger is not within the setpoint tolerance, the algorithm 70 determines whether the temperature is above the setpoint at block 76. If the temperature at the heat exchanger is above the temperature setpoint, the pressure in the heat exchanger over the expendable fluid is reduced at block 78. In an embodiment, the pressure is reduced by increasing a flow rate of a vacuum pump, ejector or similar device. The reduction in pressure will increase the fluid vaporization rate at the heat exchanger until the fluid is at the temperature corresponding to the boiling temperature at the new lower pressure. A quantity of fluid is then selectively exhausted to an ambient environment, such as overboard an aircraft at block 79. If the temperature at the heat exchanger is below the temperature setpoint, the pressure in the heat exchanger is increased by decreasing the flow rate of the vacuum pump, ejector or similar device at block 80.

At block 82 a measured temperature at a heat load thermally coupled to the heat exchanger is compared to a heat load threshold temperature. If the temperature at the heat load is below the threshold temperature, then supplemental heat is added at block 84 to increase the temperature of the heat exchanger. This may occur during initial operation of the system when heat is not yet generated by the heat load and the heat load is below a desired operating temperature. Control then returns to block 72.

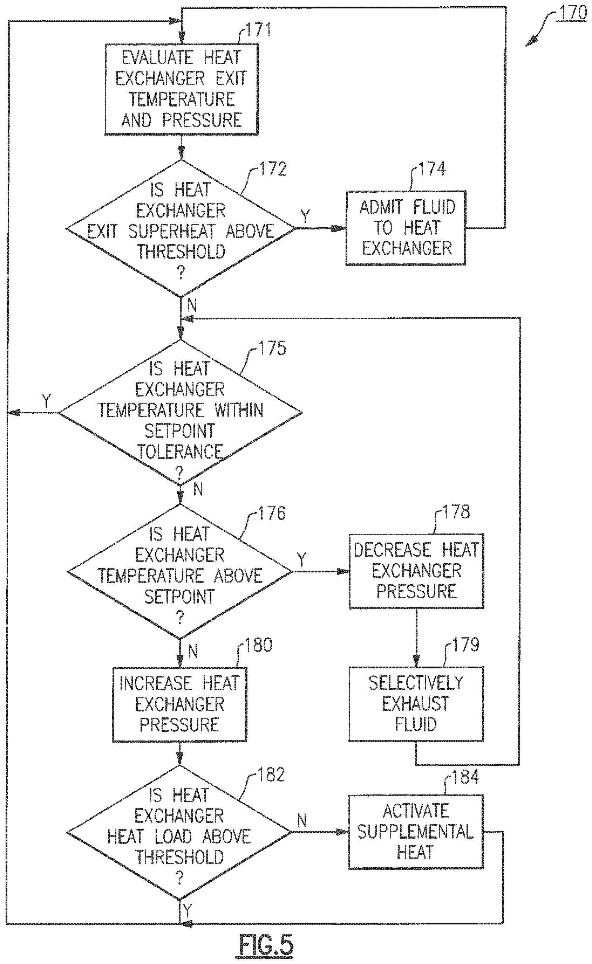

Figure 5 shows a cooling process or algorithm 170 according to a second embodiment using an expendable heat sink and may be utilized with any of the systems 20, 120, 220 as described in this disclosure. This process controls fluid level to maintain a fluid vapor exiting the heat exchanger at a relatively constant superheat, whereas process 70 controls the heat exchanger temperature by varying the heat exchanger pressure. Algorithm 170 measures the temperature and pressure of fluid vapor exiting the heat exchanger at block 171. The vapor temperature and pressure are used to determine the superheat of the vapor by a saturation curve fit calculation, table look up, or similar process. The determined superheat is compared to a predetermined superheat threshold at block 172. If the determined superheat is greater than the superheat threshold, additional expendable fluid is added to the heat exchanger at block 174 until the superheat is at or below the superheat threshold. Blocks 175-184 operate in a similar manner as blocks 75-84 of process 70. The algorithms 70, 170 may be performed with the controller 148.

Although two cooling paths or loops are primarily discussed in this disclosure, it should be appreciated that any number of cooling paths are contemplated. Any number of cooling paths or loops can be arranged in series and/or parallel to provide the desired solution. Additionally, any number of thermal loads may be arranged within the system to provide the desired solution. The cooling processes described discuss a single heat exchanger and a single load, but may be duplicated for multiple heat exchangers and/or loads and further adapted to the particular application and operating requirements.

Although the different examples have a specific component shown in the illustrations, embodiments of this disclosure are not limited to those particular combinations. It is possible to use some of the components or features from one of the examples in combination with features or components from another one of the examples. Also, although particular step sequences are shown, described, and claimed, it should be understood that steps may be performed in any order, separated or combined unless otherwise indicated and will still benefit from the present disclosure.

Furthermore, the foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A system for cooling a thermal load, comprising:
a reservoir (21) configured to communicate a working fluid (22) to a first heat exchanger boiler defining a first flow path (24), wherein the first heat exchanger is a first boiler (28) configured to cool a first load (32);
a second heat exchanger (30) defining a second flow path (26) and configured to cool a second (34), different load;
a first pump (40) configured to selectively exhaust the working fluid (22) from the first boiler (28) to an ambient environment; and **characterized in that** the working fluid (22) is communicated from the reservoir (21) to the second heat exchanger (30).

2. The system of claim 1, wherein the second heat exchanger (30) is a second boiler.

3. The system of claim 1, wherein the second flow path (26) comprises a second pump (42) positioned downstream of the second heat exchanger (30), configured to communicate the working fluid (22) from the second flow path (26) to the first flow path (24) upstream of the first pump (40).

4. The system of claim 1, wherein the second cooling path (26) is a closed loop vapor cycle system including a condenser (54) configured to reject heat from the second cooling path (26) to the first cooling path (24).

5. The system of claim 4, wherein the condenser (54) is arranged in series with the first boiler (28).

6. The system of claim 4, wherein the condenser (54) is arranged in parallel with the first boiler (28).

7. The system of claim 4, wherein the vapor cycle system (158) includes a refrigerant accumulator (164) arranged between the condenser (54) and an expansion valve (162).

8. The system of claim 1, wherein the working fluid (22) includes water.

9. The system of claim 1, comprising at least one flow control valve configured to meter flow between the reservoir (21) and at least one of the first flow path (24) and the second flow path (26).

10. The system of claim 1, wherein a first cooling capacity of the first boiler (28) is different than a second cooling capacity of the second heat exchanger (30).

11. The system of claim 1, wherein the first heat load (32) is a high temperature heat source and the second heat load (34) is a lower temperature heat source.

12. A method of cooling a thermal load, comprising:
providing a reservoir (21) configured to communicate a working fluid (22) to a boiler (28) defining a first flow path (24) and with a first cooling capacity, wherein the boiler (28) is thermally coupled to a first load (32);
providing a heat exchanger (30) defining a second flow path (26) and with a second cooling capacity, wherein the heat exchanger (30) is thermally coupled to a second load (34); and
selectively exhausting the working fluid (22) to an ambient environment downstream from the boiler (28); and **characterized in that** the working fluid (22) is communicated from the reservoir (21) to the heat exchanger (30).

13. The method as recited in claim 12, wherein the second flow path (26) is a closed loop vapor cycle system including a condenser (54) configured to reject heat from the second cooling path (20) to the first cooling path (24).

## Patentansprüche

1. System zum Kühlen einer thermischen Last, umfassend:
einen Behälter (21), der dazu ausgelegt ist, ein Arbeitsfluid (22) zu einem ersten Wärmetauscherkessel, der einen ersten Strömungsweg (24) definiert, zu kommunizieren, wobei der erste Wärmetauscher ein erster Kessel (28) ist, der dazu ausgelegt ist, eine erste Last (32) zu kühlen;
einen zweiten Wärmetauscher (30), der einen zweiten Strömungsweg (26) definiert und dazu ausgelegt ist, eine zweite (34) andere Last zu kühlen;
eine erste Pumpe (40), die dazu ausgelegt ist, das Arbeitsfluid (22) selektiv aus dem ersten Kessel (28) an eine Außenumgebung auszuströmen; und **dadurch gekennzeichnet, dass** das Arbeitsfluid (22) von dem Behälter (21) zu dem zweiten Wärmetauscher (30) kommuniziert wird.

2. System nach Anspruch 1, wobei der zweite Wärmetauscher (30) ein zweiter Kessel ist.

3. System nach Anspruch 1, wobei der zweite Strömungsweg (26) eine zweite Pumpe (42) umfasst, die stromabwärts des zweiten Wärmetauschers (30) positioniert ist und dazu ausgelegt ist, das Arbeitsfluid (22) von dem zweiten Strömungsweg (26) zu dem ersten Strömungsweg (24) stromaufwärts der ersten Pumpe (40) zu kommunizieren.

4. System nach Anspruch 1, wobei der zweite Kühlweg (26) ein Dampfzyklussystem mit geschlossenem Kreislauf ist, das einen Kondensator (54) beinhaltet, der dazu ausgelegt ist, Wärme von dem zweiten Kühlweg (26) zu dem ersten Kühlweg (24) abzuleiten.

5. System nach Anspruch 4, wobei der Kondensator (54) in Reihe mit dem ersten Kessel (28) angeordnet ist.

6. System nach Anspruch 4, wobei der Kondensator (54) parallel zu dem ersten Kessel (28) angeordnet ist.

7. System nach Anspruch 4, wobei das Dampfzyklussystem (158) einen Kältemittelspeicher (164) beinhaltet, der zwischen dem Kondensator (54) und einem Entspannungsventil (162) angeordnet ist.

8. System nach Anspruch 1, wobei das Arbeitsfluid (22) Wasser beinhaltet.

9. System nach Anspruch 1, umfassend zumindest ein Strömungssteuerventil, das dazu ausgelegt ist, Strömung zwischen dem Behälter (21) und zumindest einem von dem ersten Strömungsweg (24) und dem zweiten Strömungsweg (26) zu messen.

10. System nach Anspruch 1, wobei eine erste Kühlkapazität des ersten Kessels (28) anders als eine zweite Kühlkapazität des zweiten Wärmetauschers (30) ist.

11. System nach Anspruch 1, wobei die erste Wärmelast (32) eine Wärmequelle mit hoher Temperatur ist und die zweite Wärmelast (34) eine Wärmequelle mit geringerer Temperatur ist.

12. Verfahren zum Kühlen einer thermischen Last, umfassend:
Bereitstellen eines Behälters (21), der dazu ausgelegt ist, ein Arbeitsfluid (22) zu einem Kessel (28), der einen ersten Strömungsweg (24) definiert zu kommunizieren, mit einer ersten Kühlkapazität, wobei der Kessel (28) thermisch an eine erste Last (32) gekoppelt ist;
Bereitstellen eines Wärmetauschers (30), der einen zweiten Strömungsweg (26) definiert, mit einer zweiten Kühlkapazität, wobei der Wärmetauscher (30) thermisch an eine zweite Last (34) gekoppelt ist; und
selektives Ausströmen des Arbeitsfluids (22) an eine Außenumgebung stromabwärts des Kessels (28); und **dadurch gekennzeichnet, dass** das Arbeitsfluid (22) von dem Behälter (21) zu dem Wärmetauscher (30) kommuniziert wird.

13. Verfahren nach Anspruch 12, wobei der zweite Strömungsweg (26) ein Dampfzyklussystem mit geschlossenem Kreislauf ist, das einen Kondensator (54) beinhaltet, der dazu ausgelegt ist, Wärme von dem zweiten Kühlweg (20) zu dem ersten Kühlweg (24) abzuleiten.

## Revendications

1. Système de refroidissement d'une charge thermique, comprenant :
un réservoir (21) configuré pour communiquer un fluide de travail (22) à une première chaudière à échangeur thermique définissant un premier trajet d'écoulement (24), dans lequel le premier échangeur thermique est une première chaudière (28) configurée pour refroidir une première charge (32) ;
un second échangeur thermique (30) définissant un second trajet d'écoulement (26) et configuré pour refroidir une seconde charge (34) différente ;
une première pompe (40) configurée pour évacuer de manière sélective le fluide de travail (22) de la première chaudière (28) vers un environnement ambiant ; et **caractérisé en ce que** le fluide de travail (22) est communiqué du réservoir (21) au second échangeur thermique (30).

2. Système selon la revendication 1, dans lequel le second échangeur thermique (30) est une seconde chaudière.

3. Système selon la revendication 1, dans lequel le second trajet d'écoulement (26) comprend une seconde pompe (42) placée en aval du second échangeur thermique (30), configurée pour communiquer le fluide de travail (22) du second trajet d'écoulement (26) au premier trajet d'écoulement (24) en amont de la première pompe (40).

4. Système selon la revendication 1, dans lequel le second trajet de refroidissement (26) est un système de cycle de vapeur à boucle fermée incluant un condenseur (54) configuré pour rejeter la chaleur du second trajet de refroidissement (26) vers le premier trajet de refroidissement (24).

5. Système selon la revendication 4, dans lequel le condenseur (54) est disposé en série avec la première chaudière (28).

6. Système selon la revendication 4, dans lequel le condenseur (54) est disposé en parallèle avec la première chaudière (28).

7. Système selon la revendication 4, dans lequel le système de cycle de vapeur (158) inclut un accumulateur de réfrigérant (164) disposé entre le condenseur (54) et un détendeur (162).

8. Système selon la revendication 1, dans lequel le fluide de travail (22) inclut de l'eau.

9. Système selon la revendication 1, comprenant au moins une soupape de régulation de débit configurée pour mesurer le débit entre le réservoir (21) et au moins l'un du premier trajet d'écoulement(24) et du second trajet d'écoulement (26).

10. Système selon la revendication 1, dans lequel une première capacité de refroidissement de la première chaudière (28) est différente d'une seconde capacité de refroidissement du second échangeur thermique (30).

11. Système selon la revendication 1, dans lequel la première charge thermique (32) est une source de chaleur à haute température et la seconde charge thermique (34) est une source de chaleur à basse température.

12. Procédé de refroidissement d'une charge thermique, comprenant :
la fourniture d'un réservoir (21) configuré pour communiquer un fluide de travail (22) à une chaudière (28) définissant un premier trajet d'écoulement (24) et avec une première capacité de refroidissement, dans lequel la chaudière (28) est couplée thermiquement à une première charge (32) ;
la fourniture d'un échangeur thermique (30) définissant un second trajet d'écoulement (26) et avec une seconde capacité de refroidissement, dans lequel l'échangeur thermique (30) est couplé thermiquement à une seconde charge (34) ; et
l'évacuation de manière sélective du fluide de travail (22) dans un environnement ambiant en aval de la chaudière (28) ; et
**caractérisé en ce que** le fluide de travail (22) est communiqué du réservoir (21) à l'échangeur thermique (30).

13. Procédé selon la revendication 12, dans lequel le second trajet d'écoulement (26) est un système de cycle de vapeur à boucle fermée incluant un condenseur (54) configuré pour rejeter la chaleur du second trajet de refroidissement (20) au premier trajet de refroidissement (24).
